# EUROPEAN PATENT SPECIFICATION

(11) **EP 1 817 258 B1**
(45) Date of publication and mention of the grant of the patent: **16.02.2011**
(21) Application number: 05795991.8
(22) Date of filing: 25.10.2005
(51) Int. Cl.: C01B 39/38, C01B 39/40

(54) **IMPROVED PROCESS FOR THE PREPARATION OF ZSM-5 ZEOLITES**
VERBESSERTES VERFAHREN ZUR HERSTELLUNG VON ZSM-5-ZEOLITHEN
PROCEDE DE PREPARATION AMELIORE DE ZEOLITES ZSM-5

(30) Priority: 08.11.2004 IT MI20042136
(43) Date of publication of application: 15.08.2007
(73) Proprietor: SASOL ITALY S.p.A., 20124 Milano (IT)
(72) Inventor: ZATTA, Agostino, I-20098 San Giuliano Milanese (IT); RABAIOLI, Maria Roberta, I-21052 Busto Arsizio (IT); RADICI, Pierino, I-22078 Turate (IT); AIELLO, Rosario, I-87036 Rende (IT); CREA, Fortunato, I-87036 Rende (IT); FRONTERA, Patrizia, I-89066 Reggio Calabria (IT); GIUFFRIDA, Giuseppe, I-20100 Milano (IT)
(74) Representative: De Gregori, Antonella
(86) International application number: PCT/EP2005/011550
(87) International publication number: WO 2006/048188

(56) References cited:
- US-A- 3 702 886
- US-A- 4 275 047
- COKER E N ET AL: "Zeolite ZSM-5 synthesized in space: catalysts with reduced external surface activity" MICROPOROUS AND MESOPOROUS MATERIALS, ELSEVIER SCIENCE PUBLISHING, NEW YORK, US, vol. 46, no. 2-3, August 2001 (2001-08), pages 223-236, XP004254936 ISSN: 1387-1811
- P. N. JOSHI, A. A. SHAIKH, V. R. CHUMBHALE, B. S. RAO, V. P. SHIRALKAR: "Crystallisation of Zeolite Mordenite and ZSM-5 without the Aid of a Template" JOURNAL OF INCLUSION PHENOMENA AND MOLECULAR RECOGNITION IN CHEMISTRY, vol. 13, no. 2, June 1992 (1992-06), pages 171-179, XP009058473 Kluwer Academic Publishers, The Netherlands

## Description

The present invention relates to an improved process for the preparation of ZSM-5 zeolites.

More specifically, the present invention relates to an improved process for the preparation of ZSM-5 zeolites characterized by an Si/Al atomic ratio higher than 5, preferably ranging from 12 to 50.

Zeolites are crystalline alumino-silicates of a microporous nature having a regular, well-defined three-dimensional structure characterized by a large number of micro-cavities interconnected by means of a channel system. The three-dimensional structure of zeolites consists of TO₄ tetrahedral forms, wherein T can be a silicon or aluminum atom. The valence of the aluminum atoms is balanced by the presence in the crystal of alkaline, alkaline-earth metal ions, ammonium cations. The space available inside the three-dimensional structure can be occupied by absorbed water molecules, which can be reversibly removed by heating the zeolite.

Zeolites are officially classified into small-, medium- and large-pore zeolites. This classification is based on the number of oxygen atoms on the larger ring which delimits the access to the pore system. The ZSM-5 zeolite has a structure consisting of a channel system delimited by rings with 10 atoms. The chemical formula of the elementary cell in its anhydrous form can be represented by the following symbolic formula:

Mₓ Alₓ Si₉₆₋ₓ O₁₉₂

wherein M represents an ion of an alkaline metal or the ammonium ion and x is lower than 27.

ZSM-5 zeolites crystallize in the "orthorhombic" system with an elementary cell having the following dimensions:

| | |
|---|---|
| aₒ = 20.096 Å | α = 90.00° |
| bₒ = 19.948 Å | β = 90.00° |
| cₒ = 13.428 Å | γ = 90.00° |

The three-dimensional structure of ZSM-5 zeolites can be described by two interconnected channel systems, the first consisting of straight-line channels parallel to the "b" axis and the other comprising a "zigzag" channel system parallel to the "a" axis. The two channel systems intersect in a repetitive and regular manner so that each unitary cell contains four intersections.

In general, zeolites are normally prepared by reacting, in an aqueous medium, and possibly heating, suitable mixtures of oxides and salts of silicon and aluminum atoms in the presence of alkaline metal ions such as sodium and potassium. The product, which crystallizes after a certain period of time according to the reaction parameters, such as temperature and concentration, is then filtered, washed with water and possibly dried or calcined at a maximum temperature of 550°C until a completely anhydrous zeolite is obtained.

The synthesis of zeolites having a high silicon content, such as ZSM-5 zeolites, is normally effected by putting a solution of an organo-silicate product, prepared by dissolving an organic substance in a solution of silicon oxide (for example of colloidal silica, LUDOX, fume silica, silicic acid), in contact with a solution prepared by dissolving an organic base and an aluminum salt in water. The mixture or "gel" thus obtained is reacted in an autoclave, at a high temperature and pressure. The efficiency of the synthesis is defined by the weight of crystallized aluminum silicate which is recovered, after filtration and washing with water, with respect to the silicon and aluminum oxides initially present in the "gel". The chemical composition and the purity of the reagents used in the synthesis can be a critical factor for obtaining a completely crystalline product, not containing other zeolite phases.

The synthesis of ZSM-5 zeolites was described for the first time in the English patent GB 1,161,974, wherein a preparation is described based on hydrothermal synthesis starting from a gel containing silica, alumina, alkaline metal ions, and a quaternary ammonium compound (tetrapropyl ammonium hydroxide (n-C₃H₇)₄NOH) .

The zeolites obtained through this preparation process are microcrystalline solids consisting of silicon, aluminum, sodium and oxygen, containing the tetrapropyl ammonium ion (which, as a result of its structure, occupies in the unitary cell the positions corresponding to the four intersections of the two channel systems) and are materials whose chemical composition can be suitably expressed by the formula:

Mₓ₋₄ Q₄ Alₓ Si₉₆₋ₓ O₁₉₂ n H₂O

wherein Q represents the tetrapropyl ammonium ion, M an alkaline metal ion, and n is the number of water molecules. The tetrapropyl ammonium ion cannot be exchanged by means of conventional ion exchange processes and is removed through calcination treatment at high temperatures, up to about 600°C.

A considerable number of papers have been developed from this first patent. Synthesis processes have been found in the presence of a wide variety of organic compounds, as described, for example, in USA patents US 4,175,114 and US 4,431,621. In US patent 4,175,114, the ZSM-5 zeolite is crystallized starting from reagents cited in literature, comprising silica, alumina, and alkaline metal ions, in the presence of zeolite seeds or mixtures of zeolite seeds with alcohols and/or ammonia.

In US patent 4,431,621, the ZSM-5 zeolite is synthesized in reacting mixtures containing organic compounds with hydroxyl groups, preferably alcohols and phenols, glycols and polyglycols. It is known that the organic compound acts as a "template" in the sense that it acts as a "mold" during the formation of the zeolite structure.

It is also known that, when the ZSM-5 zeolite is prepared starting from the systems cited in literature, it is not possible to obtain the pure zeolite if the amount of alkaline metal ions, for example sodium ions, is too high. These alkaline metal ions are introduced into the system through the raw materials and, as known, the sodium silicate and aluminate solutions produced industrially by the alkaline etching of silica and alumina sand, require a high NaOH concentration.

As a result of this restriction, the synthesis systems prepared starting from solutions of sodium silicates and aluminates, necessarily contain such high concentrations of sodium that they oppose or do not allow the crystallization of the ZSM-5 zeolite, but favour the formation of other phases, both zeolitic and non-zeolitic.

Coker et al. describes a process for preparing ZSM-5 zeolites from sodium aluminate and sodium silicate solutions wherein the product further comprises an acceptable quartz content (below 25%) - "Zeolite ZSM-5 synthesized in space: catalysts with reduced external surface activity," Microporous and Mesoporous Materials, Vol. 46, pp. 223-236 (2001).

The present invention, described in more detail in the enclosed claims, relates to a process for the preparation of ZSM-5 zeolites from sodium silicate and sodium aluminate solutions, without the drawbacks present in the production processes of the known art. Said solutions are prepared from sands and aluminas of an extractive origin. An example is represented by the solutions of sodium silicate obtained from crystalline silica, such as quartz. A large quantity of sodium ions are introduced due to the use of these solutions of silicate and aluminate, in addition to silicon and aluminum. As these sodium ions are present in a high concentration in the reagents, the ratio between the sodium oxide and the aluminum oxide is higher with respect to that obtained with the other reagents.

The Applicant has found a process capable of solving the problem which arises when alkaline ions are introduced in a high quantity into the synthesis system.

According to a preferred embodiment of the process object of the present invention, once the solutions of sodium silicate and sodium aluminate have been put in contact with each other, with certain molar ratios between silica and alumina (SiO₂/Al₂O₃) and at a controlled temperature, ranging from 10 to 30°C (room temperature), possibly in the presence of a templating agent selected from the salts or compounds of quaternary ammonium from linear aliphatic amines, a specific amount of a solution of a mineral acid is introduced, for example sulphuric acid or hydrochloric acid.

It is necessary to add mineral acid in order to keep the OH⁻/H₂O molar ratio lower than 0.03, preferably ranging from 0.02 to 0.03, wherein OH⁻ represents the number of moles of NaOH which have not been neutralized by the mineral acid. When the ratio between silica and alumina increases, it is preferable to balance the amount of water and the amount of mineral acid, so as to maintain the OH⁻/H₂O ratio constant within the mentioned terms. According to the present invention, the mineral acid solution can be added to the silicate alone, to the aluminate alone or to the silicate-aluminate mixture already formed.

Both a temperature increase and a considerable increase in the viscosity of the mixture is observed by the addition of the mineral acid. As far as the operating time for the acid treatment is concerned, it is preferable to operate with addition times of the acid of over 5 minutes, generally between 20 and 30 minutes.

It has been observed that the systems are more reactive only under stirring conditions, leading to the formation of ZSM-5 zeolites in short times. In order to effect an efficient mixing-stirring during the subsequent phase, once the addition of the mineral acid solution is completed, a further amount of distilled water is added to make the system more fluid. In order to optimise both the reaction times and yields, the dilution is carried out with a quantity of water which is such that the OH⁻/H₂O ratio does not change significantly, and can be maintained at 0.017-0.022.

The synthesis mixture thus prepared is then subjected to pre-heating, still under stirring, at a low temperature ranging from 20 to 60°C, for times ranging from thirty minutes to five hours, to favour the nucleation of the ZSM-5 zeolite with respect to non-zeolite phases, such as, for example, quartz. The reactivity of the systems varies in relation to the pre-heating time carried out at a low temperature. The formation of the ZSM-5 zeolite is unfavoured when the system is brought to temperatures which are too low, for example lower than 15°C. Pre-heating to temperatures higher than 60°C favours the formation of mordenite and quartz. The duration also varies in relation to the pre-heating temperature of the "gel", as the lower the temperature, the more preferable it is to extend said nucleation period. At room temperature, for example, the best results have been obtained by extending this period up to two-three hours.

At the end of this phase, the crystallization continues under hydrothermal conditions, under stirring, at a temperature ranging from 100 to 200°C and for a sufficient time ranging from 6 to 72 hours. The crystallization kinetics change in relation to the temperature. The crystallization times for the formation of ZSM-5 zeolites decrease with an increase in the temperature. At a temperature of 160°C, for example, the crystallization times have been higher than 24 hours and high crystallizations are reached after 72 hours of reaction; in any case, the formation of other zeolite phase different from ZSM-5 zeolite, is not observed. At 180°C, 24 hours are sufficient.

As previously specified, the gels are particularly viscous and clotted and, very likely, the dimensions of these clots regulate the nucleation times and the crystallization rate. It is therefore important to reduce the dimensions of these clots as much as possible, both during the pre-heating and crystallization phase. In preparing the synthesis, it would be preferable that the additions of the reagents be carried out in a reactor equipped with an external thermostat-regulated system and mechanically stirred with an anchor or propeller suitable for a high rev rate.

The process, in relation to the ratio between the silica and alumina of the reagent blend, can be applied for the preparation of ZSM-5 zeolites in the presence of or without the quaternary ammonium salt.

By controlling the critical factors and obviously including the SiO₂/Al₂O₃ ratio of the reacting mix, the molar ratios between the reagents in which the ZSM-5 zeolite can be crystallized as a pure and completely crystalline phase, starting from solutions of sodium silicate and sodium aluminate, are the following:
- SiO₂/Al₂O₃ from 20 to 200, extremes included;
- Na₂O/Al₂O₃ from 14 to 100, extremes included;
- X/Al₂O₃ from 5 to 50, extremes included;
- Q/Al₂O₃ from 0 to 2, extremes included;
- OH⁻/H₂O from 0.017 to 0.022, extremes included;
wherein X represents the anion of a mineral acid and Q is an organic compound of quaternary ammonium from a linear amine (tertiary). OH- represents the number of moles of NaOH after the addition of the mineral acid.

The range of SiO₂/Al₂O₃ ratios in which the ZSM-5 zeolite can be obtained without the necessity of introducing the quaternary ammonium organic compound from a linear amine, varies from 20 to 60, extremes included.

If present, the concentration of the organic compound of quaternary ammonium is controlled so as to not have an organic residue in the reaction water, which would then require a specific treatment for eliminating the residue from the reaction. Examples of organic compounds of quaternary ammonium are those having the general formula:

(R₁R₂R₃R₄)₄N⁺ - X⁻

wherein R₁ R₂ R₃ and R₄, the same or different, represent a C₁-C₃ linear alkyl radical and X is an anion, for example a halide, sulphate, acetate or the OH⁻ group. Particular examples of these compounds are tetrapropyl ammonium hydroxide or bromide.

Furthermore, the content of the organic compound of quaternary ammonium in the structural cavities of the ZSM-5 zeolite with a high Si/Al ratio, is lower than 2 moles per unitary cell. Considering that in the synthesis system, the Q/SiO₂ ratio is at the most equal to 0.01, this fact confirms that, during the crystallization process, the ZSM-5 zeolite, uses practically the whole amount of organic compound available in the system.

As a result of all these factors, the industrial embodiment of the process, object of the present invention, is particularly advantageous; the raw materials are available at a low cost, as they are solutions of sodium silicate or aluminate, the organic compound is absent or, at the most, is used at a low concentration, the whole process is run at such a concentration as to allow a high production capacity and the preparation times are suitable for an industrial production. The overall production times of the ZSM-5 zeolite range from a minimum of 6 to a maximum of 72 hours.

The residual sodium ions in the ZSM-5 zeolite crystals can be exchanged with an acid to obtain the zeolite in acid form.

By following a preferred embodiment of the process, object of the present invention, the ZSM-5 zeolite is obtained according to a method which essentially consists of:
a) preparing two aqueous solutions of sodium aluminate and sodium silicate, containing, respectively:
   - Al₂O₃ and Na₂O wherein the Na₂O/Al₂O₃ weight ratio is higher than 0.8, generally ranging from 1.1 to 1.5, and, optionally, an organic compound of quaternary ammonium from a linear amine; and
   - SiO₂ and Na₂O wherein the SiO₂/Na₂O weight ratio is higher than 1, generally ranging from 2 to 3.5;
b) putting the two solutions prepared during the previous step in contact with each other, under stirring, regulating the quantity of reagents so as to respect the above molar ratios, operating at room temperature, preferably from 10 to 30°C over a period of time ranging from 15 to 30 minutes;
c) adding a solution of mineral acid, such as sulphuric acid or hydrochloric acid, over a period of more than 5 minutes, preferably between 20 and 30 minutes, to solution (a) or solution (b), or to solution (a)+(b), in such a quantity as to maintain the OH⁻/H₂O molar ratio between 0.02 and 0.03;
d) adding a quantity of water sufficient for maintaining the reagent mix fluid during the subsequent phases and wherein the water addition is such as to have a final H₂O/Al₂O₃ ratio in the reacting mixture, ranging from 400 to 2,000 and an OH⁻/H₂O molar ratio from 0.017 to 0.022;
e) pre-heating the final mixture obtained at the end of steps (a)-(d) for a time ranging from 30 minutes to 5 hours, under stirring, at a temperature ranging from 20 to 60°C, preferably from 20 to 40°C;
f) heating the mixture, under stirring, for a sufficient time, ranging from 6 to 72 hours, at a temperature ranging from 100 to 200°C, preferably from 150 to 180°C.

Some illustrative and non-limiting examples are provided hereunder for a better understanding of the present invention and for its embodiment.

The zeolites obtained with the following examples were identified on the basis of the X-ray diffraction pattern. The chemical composition was determined on the anhydrous product, obtained by subjecting the sample to a calcination treatment at 550°C for over 16 hours, by means of ICP-AES (Inductively Coupled Plasma-Atomic Emission Spectrometry) analysis. In the example, the parts and percentages are intended, unless otherwise specified, as parts and percentages by weight.

### EXAMPLE 1

The following solutions are poured, under stirring and at room temperature (about 20°C), into a 1-liter steel reactor, equipped with an anchor stirrer, thermometer and external electric heating system:
- sodium silicate (442 parts) with 28.2% of SiO₂ and 14.0% of Na₂O;
- sodium aluminate (35.25 parts) with 13.4% of Al₂O₃ and 14.2% of Na₂O;

A gel mass is obtained to which a solution of sulphuric acid is added, consisting of 85 parts at 96% and 89 parts of water, over a period of 30 minutes, maintaining the system under stirring. At the end, a quantity of water is added, equal to 138 parts, obtaining a low viscosity mass. The gel thus obtained is pre-heated to 40°C under stirring for two hours and 30 minutes and, at the end, is reacted at 180°C for 24 hours, still under stirring. The suspension is filtered under vacuum, the solid washed with demineralized water, dried in an oven at 100°C for about 3 hours and left to stabilize in air. An aliquot of this product was analyzed with X-rays and identified as pure ZSM-5 zeolite.

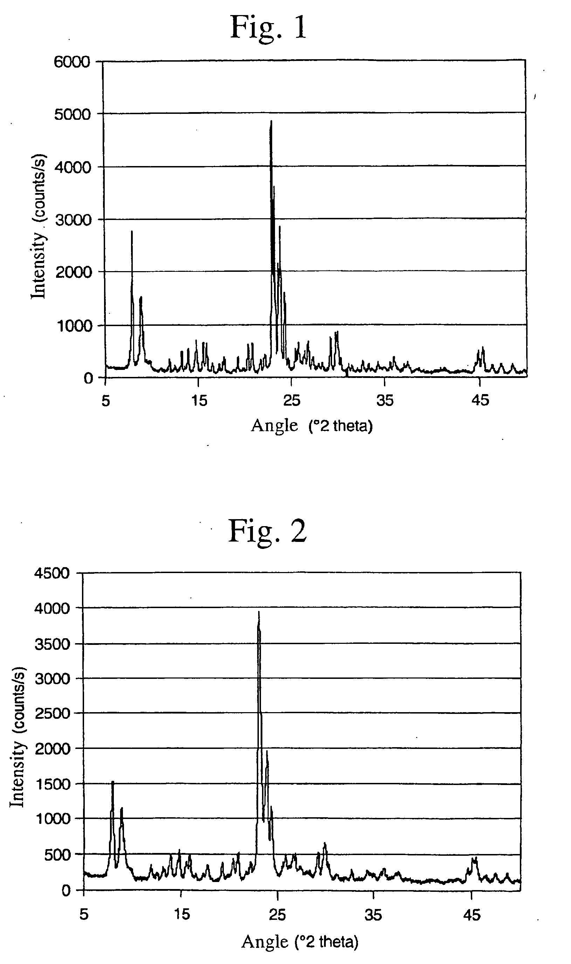

The X-ray diffraction pattern, which is characteristic of the product, is shown in figure 1. An aliquot was subjected to calcination at 550°C for 16 hours in air, until an anhydrous zeolite was obtained, which was subjected to ICP-AES analysis in order to determine the SiO₂/Al₂O₃ molar ratio, which proved to be equal to 29.3, corresponding to a composition of : 91.4% SiO₂; 5.3% Al₂O₃; 3.3% Na₂O.

### EXAMPLE 2

The following solutions are poured, under stirring and at room temperature (about 20°C), into a 1-liter steel reactor, equipped with an anchor stirrer, thermometer and external electric heating system:
- sodium silicate (442 parts) with 28.7% of SiO₂ and 13.5% of Na₂O;
- sulphuric acid, 81 parts at 96% and 103 parts of water.
   Maintaining the system under stirring, the solution of
- sodium aluminate (26.95 parts) with 13.4% of Al₂O₃ and 14.2% of Na₂O is added.

A gel mass is obtained to which a quantity of water equal to 105 parts is added, at the end, obtaining a low viscosity mass. The gel thus obtained is pre-heated to 40°C under stirring for two hours and 30 minutes and, is subsequently reacted at 160°C for 72 hours, still under stirring. The suspension is filtered under vacuum, the solid product washed with demineralized water, dried in an oven at 100°C for about 3 hours and left to stabilize in air.

A pure ZSM-5 zeolite is obtained having an X-ray diffraction pattern, whose characteristic peaks are shown in figure 2. The SiO₂/Al₂O₃ molar ratio of the calcined product at 550°C for 16 hours, proved to be equal to 52.9, corresponding to a composition of : 95.1% of SiO₂; 3.05% of Al₂O₃; 1.85% of Na₂O on the anhydrous product.

### EXAMPLE 3

The following solutions are poured, under stirring and at room temperature (about 20°C), into a 1-liter steel reactor, equipped with an anchor stirrer, thermometer and external electric heating system:
- sodium silicate (472 parts) with 30.5% of SiO₂ and 9.2% of Na₂O;
- sulphuric acid, (46 parts) at 96%.

A mass is obtained, which is kept under stirring for 10 minutes. A solution is then added, containing:
- sodium aluminate (18.2 parts) with 13.5% of Al₂O₃ and 14.2% of Na₂O;
- demineralized water (133 parts);
- n-tetrapropyl ammonium bromide (3.2 parts).

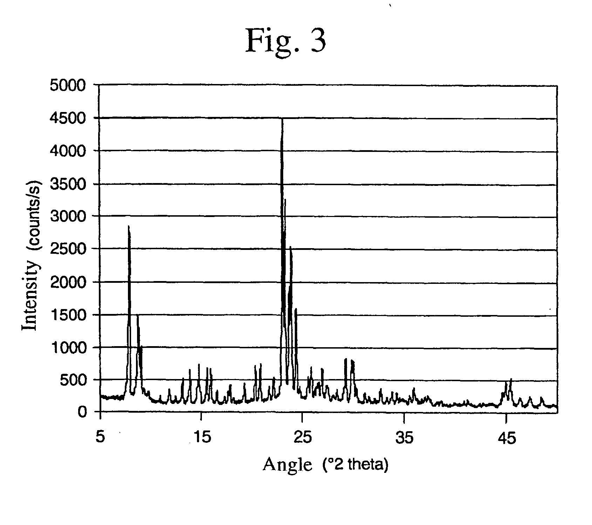

Demineralized water (73 parts) is then introduced under stirring. A gel mass is obtained which is pre-heated for 2 hours to 40°C. The mass is then heated to about 180°C and is maintained at this temperature for 72 hours. The solid formed is filtered under vacuum, washed with demineralized water, dried at 100°C for 4 hours, and left to stabilize in air. A pure ZSM-5 zeolite is obtained, as shown in the pattern in Figure 3. The SiO₂/Al₂O₃ molar ratio of the calcined product at 550°C for 16 hours, proved to be equal to 100.6, corresponding to : 97.6% SiO₂; 1.65% Al₂O₃; 0.75% Na₂O.

## Claims

1. A process for the preparation of ZSM-5 zeolites essentially consisting of:
a) preparing two aqueous solutions of sodium aluminate and sodium silicate, containing, respectively:
- Al₂O₃ and Na₂O wherein the Na₂O/Al₂O₃ weight ratio is higher than 0.8, and, optionally, an organic compound of quaternary ammonium from a linear amine; and
- SiO₂ and Na₂O wherein the SiO₂/Na₂O weight ratio is higher than 1;
b) putting the two solutions prepared during the previous step, in contact with each other, under stirring, regulating the quantity of reagents so as to respect the above molar ratios, operating at room temperature, for a period of time ranging from 15 to 30 minutes;
c) adding a solution of mineral acid, over a period of over 5 minutes, to solution (a) or solution (b), or to solution (a)+(b), in such a quantity as to maintain the OH⁻/H₂O molar ratio within the range of 0.02 to 0.03;
d) adding a quantity of water sufficient for keeping the reacting mixture fluid during the subsequent phases and wherein the water addition is such as to have a final H₂O/Al₂O₃ ratio in the reacting mixture, ranging from 400 to 2,000 and an OH⁻/H₂O molar ratio from 0.017 to 0.022;
e) pre-heating the final mixture obtained at the end of steps (a)-(d) for a time ranging from 30 minutes to 5 hours, under stirring, at a temperature ranging from 20 to 60°C;
f) heating the mixture, under stirring, for a sufficient time, ranging from 6 to 72 hours, to a temperature ranging from 100 to 200°C.

2. The process according to claim 1, wherein the molar ratios between the reagents are:
- SiO₂/Al₂O₃ from 20 to 200, extremes included;
- Na₂O/Al₂O₃ from 14 to 100, extremes included;
- X/Al₂O₃ from 5 to 50, extremes included;
- Q/Al₂O₃ from 0 to 2, extremes included;
- OH⁻/H₂O from 0.017 to 0.022, extremes included;
wherein X represents the anion of a mineral acid and Q is an organic compound of quaternary ammonium from a linear amine.

3. The process according to claim 1 or 2, wherein the ZSM-5 zeolite has an Si/A1 atomic ratio higher than 5.

4. The process according to claim 1, 2 or 3, wherein the range of SiO₂/Al₂O₃ ratios within which the ZSM-5 zeolite can be obtained without the necessity of introducing the organic compound of quaternary ammonium, varies from 20 to 60, extremes included.

5. The process according to any of the previous claims, wherein the mineral acid is selected from sulphuric acid and hydrochloric acid.

6. The process according to any of the previous claims, wherein the organic compound of quaternary ammonium is selected from those having the general formula:
(R₁R₂R₃R₄)₄N⁺ - X⁻
wherein R₁ R₂ R₃ and R₄, the same or different, represent a C₁-C₃ linear alkyl radical and X is an anion, selected from a hydroxide, a halide, a sulphate and an acetate.

## Patentansprüche

1. Verfahren zur Herstellung von ZSM-5-Zeolithen, das im Wesentlichen in Folgendem besteht:
a) Zubereiten von zwei wässrigen Lösungen aus Natriumaluminat und Natriumsilikat, die jeweils Folgendes enthalten:
- Al₂O₃ und Na₂O, wobei das Na₂O/Al₂O₃-Gewichtsverhältnis größer als 0,8 ist, und wahlweise einer organischen quartären. Ammoniumverbindung aus einem linearen Amin; und
- SiO₂ und Na₂O, wobei das SiO₂/Na₂O-Gewichtsverhältnis größer als 1 ist;
b) Miteinander-in-Kontakt-bringen unter Rühren der zwei beim vorherigen Schritt zubereiteten Lösungen bei Raumtemperatur für einen Zeitraum in einem Bereich von 15 bis 30 Minuten, wobei die Menge der Reagenzien so reguliert wird, dass die oben genannten Molverhältnisse eingehalten werden;
c) Hinzufügen einer Mineralsäurelösung über einen Zeitraum von mehr als 5 Minuten zur Lösung (a) oder zur Lösung (b) oder zur Lösung (a) + (b) in einer solchen Menge, dass das OH⁻/H₂O-Molverhältnis im Bereich von 0,02 bis 0,03 gehalten wird;
d) Hinzufügen einer ausreichenden Menge Wasser, um das Reaktionsgemisch während der nachfolgenden Phasen flüssig zu halten, und wobei das Hinzufügen des Wassers derart erfolgt, dass das endgültige H₂O/Al₂O₃-Verhältnis im Reaktionsgemisch im Bereich von 400 bis 2.000 liegt und ein OH⁻/H₂O-Molverhältnis von 0,017 bis 0,022 gegeben ist;
e) Vorerwärmen des am Ende der Schritte (a) bis (d) erhaltenen endgültigen Gemischs für eine Zeit im Bereich von 30 Minuten bis 5 Stunden unter Rühren bei einer Temperatur im Bereich von 20 bis 60°C;
f) Erhitzen des Gemischs unter Rühren für eine hinreichende Zeit im Bereich von 6 bis 72 Stunden auf eine Temperatur im Bereich von 100 bis 200°C.

2. Verfahren nach Anspruch 1, wobei die Molverhältnisse zwischen den Reagenzien folgendermaßen sind:
- SiO₂/Al₂O₃ von 20 bis 200, Grenzwerte eingeschlossen; Na₂O/Al₂O₃ von 14 bis 100, Grenzwerte eingeschlossen;
- X/Al₂O₃ von 5 bis 50, Grenzwerte eingeschlossen;
- Q/Al₂O₃ von 0 bis 2, Grenzwerte eingeschlossen;
- OH⁻/H₂O von 0,017 bis 0,022, Grenzwerte eingeschlossen;
wobei X das Anion der Mineralsäure darstellt und Q eine organische quartäre Ammoniumverbindung aus einem linearen Amin ist.

3. Verfahren nach Anspruch 1 oder 2, bei dem der ZSM-5-Zeolith ein Si/A1-Atomverhältnis größer als 5 hat.

4. Verfahren nach Anspruch 1, 2 oder 3, bei dem der Bereich der SiO₂/Al₂O₃-Verhältnisse, innerhalb dessen der ZSM-5-Zeolith erhalten werden kann, ohne dass die Einleitung der organischen quartären Ammoniumverbindung erforderlich ist, von 20 bis 60, Grenzwerte eingeschlossen, variiert.

5. Verfahren nach einem der vorherigen Ansprüche, bei dem die Mineralsäure aus Schwefelsäure und Salzsäure ausgewählt wird.

6. Verfahren nach einem der vorherigen Ansprüche, bei dem die organische quartäre Ammoniumverbindung aus denen ausgewählt wird, welche die folgende allgemeine Formel haben:
(R₁R₂R₃R₄)₄N⁺ - X⁻
wobei R₁ R₂ R₃ und R₄, gleich oder verschieden, einen linearen C₁-C₃-Alkylrest darstellen und X ein aus einem Hydroxid, einem Halogenid, einem Sulfat und einem Acetat ausgewähltes Anion ist.

## Revendications

1. Procédé de préparation de zéolites ZSM-5 consistant substantiellement à :
a) préparer deux solutions aqueuses d'aluminate de sodium et silicate de sodium, contenant, respectivement :
- Al₂O₃ et Na₂O où le rapport pondéral de Na₂O/Al₂O₃ est supérieur à 0,8, et, optionnellement, un composé organique d'ammonium quaternaire à partir d'une amine linéaire ; et
- SiO₂ et Na₂O où le rapport pondéral de SiO₂/Na₂O est supérieur a 1 ;
b) mettre les deux solutions préparées au cours de l'étape précédente en contact entre elles, sous agitation, en régulant la quantité de réactifs de façon à respecter les rapports molaires ci-dessus, opérant à température ambiante, pendant une période de temps allant de 15 à 30 minutes ;
c) ajouter une solution d'acide minéral, pour une période de plus de 5 minutes, à la solution (a) ou à la solution (b), ou à la solution (a)+(b), dans une quantité telle que le rapport molaire OH⁻/H₂O est maintenu dans la plage allant de 0,02 à 0,03 ;
d) ajouter une quantité d'eau suffisante pour maintenir le mélange réactionnel fluide pendant les étapes suivantes et où l'addition d'eau est telle que l'on a un rapport de H₂O/Al₂O₃ final dans le mélange réactionnel, allant de 400 à 2,000 et un rapport molaire de OH⁻/H₂O de 0,017 à 0,022 ;
e) préchauffer le mélange final obtenu à la fin des étapes (a)-(d) pour un temps allant de 30 minutes à 5 heures, sous agitation, à une température allant de 20 à 60°C ;
f) chauffer le mélange, sous agitation, pour un temps suffisant, allant de 6 à 72 heures, jusqu'à une temperature allant de 100 à 200°C.

2. Le procédé selon la revendication 1, dans lequel les rapports molaires entre les réactifs sont :
- SiO₂/Al₂O₃ de 20 à 200, extrêmes inclus ;
- Na₂O/Al₂O₃ de 14 à 100, extrêmes inclus ;
- X/Al₂O₃ de 5 à 50, extrêmes inclus ;
- Q/Al₂O₃ de 0 à 2, extrêmes inclus ;
- OH⁻/H₂O de 0,017 à 0,022, extrêmes inclus ;
où X représente l'anion d'un acide minéral et Q est un composé organique d'ammonium quaternaire d'une amine linéaire.

3. Le procédé selon les revendications 1 ou 2, dans lequel la zéolite ZSM-5 a un rapport atomique de Si/A1 supérieur à 5.

4. Le procédé selon la revendication 1, 2 ou 3, dans lequel la plage des rapports de SiO₂/Al₂O₃ dans laquelle la zéolite ZSM-5 peut être obtenue sans nécessité d'introduire le composé organique d'ammonium quaternaire, va de 20 à 60, extrêmes inclus.

5. Le procédé selon l'une quelconque des revendications précédentes, dans lequel l'acide minéral est choisi entre l'acide sulfurique et l'acide chlorhydrique.

6. Le procédé selon l'une quelconque des revendications précédentes, dans lequel le composé organique d'ammonium quaternaire est choisi parmi ceux qui ont la formule générale :
(R₁R₂R₃R₄)₄N⁺ - X⁻
où R₁ R₂ R₃ et R₄, identiques ou différents, représentent un radical alkyle linéaire en C₁-C₃ et X est un anion, choisi parmi un hydroxyde, un halogénure, un sulfate et un acétate.
